# EUROPEAN PATENT APPLICATION

(11) **EP 3 051 887 A1**
(43) Date of publication of application: **03.08.2016**
(21) Application number: 14848215.1
(22) Date of filing: 04.09.2014
(51) Int. Cl.: H04W 52/02, H04W 16/32, H04W 24/10, H04W 84/10

(54) **BASE STATION, USER TERMINAL, AND WIRELESS-COMMUNICATION CONTROL METHOD**

(30) Priority: 26.09.2013 JP 2013199192
(71) Applicant: NTT Docomo, Inc., Tokyo 100-6150 (JP)
(72) Inventor: HARADA, Hiroki, Tokyo 100-6150 (JP); TAKEDA, Kazuki, Tokyo 100-6150 (JP); NAGATA, Satoshi, Tokyo 100-6150 (JP)
(74) Representative: Hoffmann Eitle
(86) International application number: PCT/JP2014/073287
(87) International publication number: WO 2015/045775

(57) **Abstract**

The present invention is designed to adequately control small cells (small base stations) on/off in a structure where small cells and macro cells are arranged to overlap each other. A base station forms a small cell that is arranged to overlap a macro cell and applies an on state, a DTX state and an off state in a switching manner, and this base station has a detection section that detects a UL signal transmitted from a user terminal, a control section that controls the transition from the off state to the DTX state based on the detection of the UL signal, and a transmission section that transmits a detection/measurement signal in the DTX state, and the control section controls the transition from the DTX state to the on state based on information that is reported depending on the result of a measurement report from the user terminal having received the detection/measurement signal.

## Description

### Technical Field

The present invention relates to a base station, a user terminal and a radio communication control method in a next-generation mobile communication system.

### Background Art

In a UMTS (Universal Mobile Telecommunications System) network, the specifications of long-term evolution (LTE) have been drafted for the purposes of further increasing high-speed data rates, providing lower delay and so on (non-patent literature 1). In LTE, as multiple access schemes, a scheme that is based on OFDMA (Orthogonal Frequency Division Multiple Access) is used in downlink channels (downlink), and a scheme that is based on SC-FDMA (Single-Carrier Frequency Division Multiple Access) is used in uplink channels (uplink).

Also, successor systems of LTE (referred to as, for example, "LTE-advanced" or "LTE enhancement" (hereinafter referred to as "LTE-A")) have been under study for the purpose of achieving further broadbandization and increased speed beyond LTE. In the LTE-A system, a HetNet (Heterogeneous Network), in which small cells (for example, pico cells, femto cells and so on) each having local a coverage area of a radius of approximately several tens of meters are formed within a macro cell having a wide coverage area of a radius of approximately several kilometers, is under study (see, for example, non-patent literature 2). Also, in relationship to the HetNet, a study is in progress to use carriers of different frequency bands between the macro cell (macro base station) and the small cells (small base stations), in addition to the same frequency band.

### Citation List

### Non-Patent Literature

Non-Patent Literature 1: 3GPP TS 36.300 "Evolved UTRA and Evolved UTRAN Overall Description"
Non-Patent Literature 2: 3GPP TR 36.814 "E-UTRA Further Advancements for E-UTRA Physical Layer Aspects"

### Summary of Invention

### Technical Problem

In the above-noted HetNet, many small cells may be placed in the macro cell. In this case, for example, it may be possible to arrange small cells in a localized manner in places where the traffic is heavy, and achieve an off-loading effect between the cells. Also, from the perspective of saving power over the network and reducing the interference against neighboring cells, it may be possible to make small cells (small base stations) with a light traffic load among a plurality of small cells stop transmitting signals and assume an off state (or a DTX state).

When small cells (small base stations) are controlled to be switched on/off, the transition from the on state to the off state (or DTX) may be decided by monitoring the traffic in these small cells from the network side. On the other hand, the transition from the off state to the on state needs to be controlled by adequately identifying the traffic that is produced in off-state small cell areas. However, since the DL signals (reference signals, data signals, etc.) that are transmitted regularly during the on state are not transmitted from off-state small base stations, how to control the transition of small cells in the off state to the on state poses the problem. For example, there is a demand to allow off-state small cell to transition to the on state adequately.

The present invention has been made in view of the above, and it is therefore an object of the present invention to provide a base station, a user terminal and a radio communication control method, whereby, in a structure in which small cells and macro cells are arranged to overlap each other, the small cells (small base stations) can be controlled on/off adequately.

### Solution to Problem

The base station of the present invention provides a base station that forms a small cell that is arranged to overlap a macro cell and applies an on state, a DTX state and an off state in a switching manner, and this base station has a detection section that detects a UL signal transmitted from a user terminal, a control section that controls the transition from the off state to the DTX state based on the detection of the UL signal, and a transmission section that transmits a detection/measurement signal in the DTX state, and the control section controls the transition from the DTX state to the on state based on information that is reported depending on the result of a measurement report from the user terminal having received the detection/measurement signal.

### Advantageous Effects of Invention

According to the present invention, it is possible to adequately control small cells (small base stations) on/off in a structure where small cells and macro cells are arranged to overlap each other.

### Brief Description of Drawings

FIG. 1 is a conceptual diagram of a HetNet;
FIG. 2 is a diagram to explain an example case where part of a plurality of small cells is placed in an off state;
FIG. 3 is a diagram to show an example of the operation of UL-based on/off control of small cells;
FIG. 4 is a diagram to show an example of the operation procedures of on/off control of small cells according to the present embodiment;
FIG. 5 is a schematic diagram to show an example of a radio communication system according to the present embodiment;
FIG. 6 is a diagram to explain an overall structure of a radio base station according to the present embodiment;
FIG. 7 is a diagram to explain a functional structure of a macro base station according to the present embodiment;
FIG. 8 is a diagram to explain a functional structure of a small base station according to the present embodiment;
FIG. 9 is a diagram to explain an overall structure of a user terminal according to the present embodiment; and
FIG. 10 is a diagram to explain a functional structure of a user terminal according to the present embodiment.

### Description of Embodiments

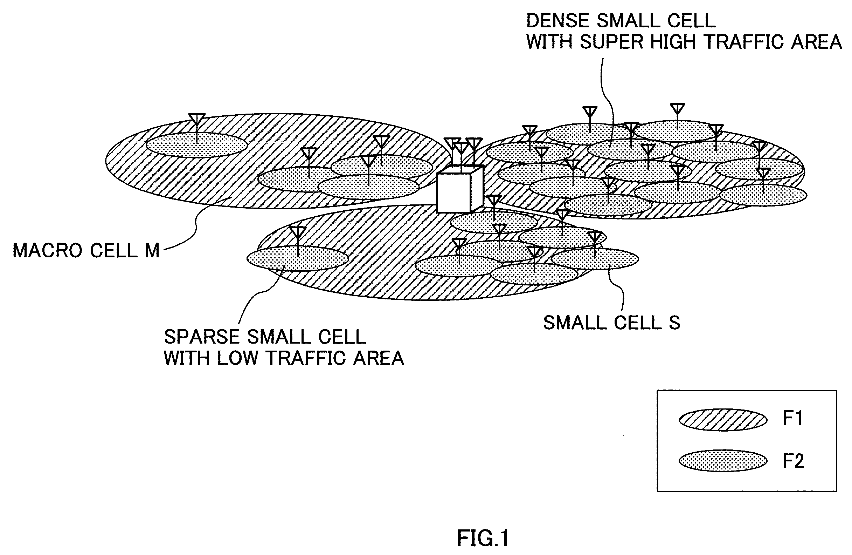

FIG. 1 is a conceptual diagram of the HetNet that is assumed in Rel. 12 and later versions. As shown in FIG. 1, a HetNet refers to a radio communication system in which macro cells and small cells are arranged to overlap each other geographically at least in part. A HetNet is comprised at least of a radio base station that forms a macro cell (hereinafter referred to as a "macro base station"), a radio base station that forms a small cell (hereinafter referred to as a "small base station"), and a user terminal that communicates with the macro base station and the small base station.

Referring to FIG. 1, in the macro cells M, a carrier F1 (hereinafter referred to as the "low frequency band carrier") of a relatively low frequency band -- for example, 800 MHz or 2 GHz -- is used. On the other hand, in a plurality of small cells S, a carrier F2 (hereinafter referred to as the "high frequency band carrier") of a relatively high frequency band -- for example, 3.5 GHz -- is used. Note that 800 MHz, 2 GHz and 3.5 GHz are only examples. 3.5 GHz may be used for the carrier for the macro cells M, and 800 MHz, 2 GHz, 1.7 GHz and others may be used for the carrier for the small cells S.

In this way, a scenario ("separate frequencies") to employ different frequencies between small cells S and macro cells M is under study for LTE-A radio communication systems (Rel. 12 and later versions). In this case, it may be possible to use the macro cells M and the small cell S, which use different frequencies, simultaneously, by means of CA (carrier aggregation).

Now, generally speaking, the distribution of users and traffic are not even, but change over time or between locations. Consequently, when many small cells are placed in a macro cell, the small cells may be arranged in such a manner that their density and environment vary (sparse and dense) between locations, as shown in above FIG. 1.

For example, it may be possible to raise the density of placing small cells (dense small cells) in train stations, shopping malls and so on where many user terminals gather, and lower the density of placing small cells (sparse small cells) in places where user terminals do not gather. As shown in FIG. 1, by placing small cells densely and in a localized manner (that is, in clusters) in places where the traffic is heavy, it is possible to achieve an off-loading effect between the cells. On the other hand, when small cells are placed in a high density, the impact of interference grows between the cells due to DL signals that are transmitted from neighboring cells.

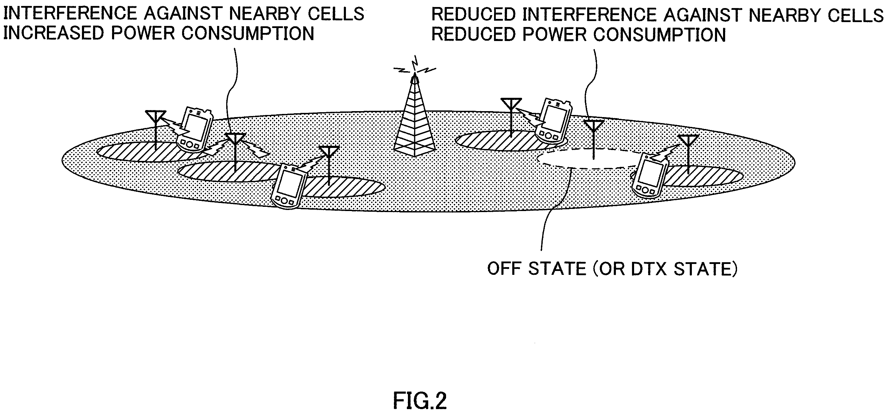

Also, assuming a structure in which a plurality of small cells (small base stations) are placed within a macro cell, a study is in progress to switch on/off and control each small cell depending on the traffic load of the small cells. For example, as shown in FIG. 2, it may be possible to place small cells with a light traffic load in the off state.

Small base stations having transitioned to the off state do not transmit DL signals (for example, cell-specific reference signals (CRSs)) and so on, so that it is possible to reduce the interference against neighboring small cells. Also, by placing small base stations with a light traffic load (for example, there is no traffic) in the off state, it is possible to achieve reduced power consumption (energy saving).

Furthermore, in order to maximize the energy saving and the effect of reducing the interference against other cells, a study is in progress to control small cells on/off in a dynamic manner. For example, by controlling small cells (small base stations) on/off in predetermined transmission time interval units (for example, subframes), it becomes possible to reduce interference and achieve energy saving more effectively.

When switching on/off and controlling small cells (small base stations), the transition from the on state to the off state (including the DTX state) may be decided by monitoring traffic from the network side. On the other hand, the transition from the off state to the on state needs to be carried out by identifying the traffic that is produced in off-state small cells. However, since the DL signals (reference signals, data signals, etc.) that are transmitted regularly during the on state are not transmitted from off-state small base stations, how to control the transition of small cells in the off state to the on state poses the problem.

As a method of allowing transition from the off state to the on state, the present inventors are working on a (DL-based) method in which off-state small cells transmit a specific DL signal (also referred to as a "detection/measurement signal," a "discovery signal," etc.) in a long cycle, and decisions are made based on the detection/measurement result of this DL signal in user terminals. To be more specific, a user terminal that has received the detection/measurement signal (discovery signal) from a small cell measures the receiving conditions of this detection/measurement signal and sends a report to the network (for example, the macro base station). Then, based on this measurement result, the macro base station decides whether or not to make this small cell transition to the on state. However, according to the DL-based method, DL signals need to be transmitted periodically even during the off state (that is, the DTX state needs to be kept), and therefore the effects of reducing interference and saving energy are insufficient compared to the complete off state.

Meanwhile, as a method of allowing transition from the off state to the on state, the present inventors are also working on a (UL-based) method of making transition to the on state when an off-state cell detects a UL signal transmitted from a user terminal. The UL-based method can be used in a structure in which DL signals are not transmitted during the off state, so that, compared to the DL-based method, good effects of reducing interference and saving energy can be achieved.

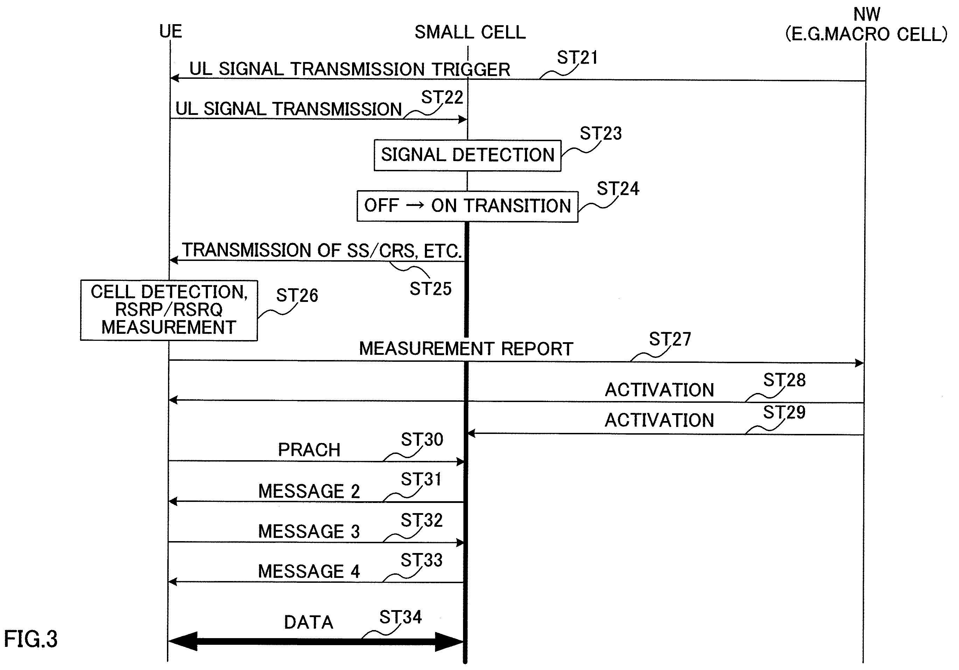

However, with the UL-based method, there is nothing a user terminal can measure with respect to an off-state cell, until this off-state cell transitions to the on state. Consequently, if a cell in the off state is made to transition to the on state based on a UL signal from a user terminal and then connection with this cell is established, measurement operations for connection need to be carried out anew after the transition to the on state has been made, which gives a threat of increased connection delay. Now, an example of the operation of UL-based on/off control of small cells will be described below with reference to FIG. 3.

First, a macro cell (macro base station (Macro eNodeB)) commands a user terminal to transmit a UL signal (UL transmission signal trigger) (ST21). The user terminal, commanded by the transmission signal trigger from the macro base station, transmits a UL signal (ST22).

A small cell (small base station) in the off state listens to (monitors) and tries to detect this UL signal (ST23). The off-state small base station having detected the UL signal from the user terminal transitions to the on state (ST24), and transmits a synchronization signal (SS), a reference signal (CRSs) and so on (ST25). The user terminal detects the small cell and measures the receiving conditions (RSRP, RSRQ, etc.) based on the DL signals (SS, CRS, etc.) transmitted from the small cell having transitioned to the on state (ST26).

After that, the user terminal transmits the measurement results to the macro base station in the form of a measurement report (MR) (ST27), and the macro base station determines to make the small base station on/off based on this MR and others. If deciding to make the small cell transition to the on state, the macro base station sends a report to that effect (for example, an SCell activation) to the small base station and the user terminal (ST28 and 29).

Following this, as in existing systems, after the random access procedures for existing systems are carried out and connection is established between the user terminal and the small base station having transitioned to the on state (RRC reconf. complete) (ST30 to 33), data is transmitted/received (ST34).

In this way, when a small base station is controlled on/off such that the small base station, when in the off state, is triggered by a UL signal from a user terminal to transition to the on state, it is necessary to execute the random access procedures and establish connection after the small cell transitions to the on state (ST27 and 28), and transmit/receive data. That is, the present inventors have found out the problem that the user terminal needs to carry out measurement operations (random access procedures) for connection anew after the small base station transitions to the on state, and that the connection delay therefore increases.

So, the present inventors have come up with the idea of making a small base station transition from the off state to the DTX state based on a UL signal from a user terminal, and controlling the transition from the DTX state to the on state based on the MR from the user terminal for the detection/measurement signal that is transmitted from the small base station during the DTX state. Furthermore, the present inventors have found out, in the DTX state, combining and carrying out the transmission of the detection/measurement signal from the small base station, the transmission of the MR from the user terminal and the connection procedures (random access procedures).

Now, the present embodiment will be described below in detail with reference to the accompanying drawings. Note that, in the following description, when a small base station (small cell) is in the off state, this refers to the state in which the small base station can receive UL signals from user terminals but does not transmit DL signals. Also, when a small base station is in the discontinuous transmission (DTX) state, this refers to the state in which the small base station transmits the DL signal for measurement use (small cell detection) in a long cycle. Also, when a small base station is in the on state, this refers to the state in which the small base station carries out communication in the same way as existing base stations (legacy carriers) do. That is, although small base stations in the on-state can transmit DL signals on a per subframe basis, including downlink reference signals such as cell-specific reference signals (CRSs), data signals, control signals and so on, small base stations in the DTX state do not transmit DL signals on a per subframe basis.

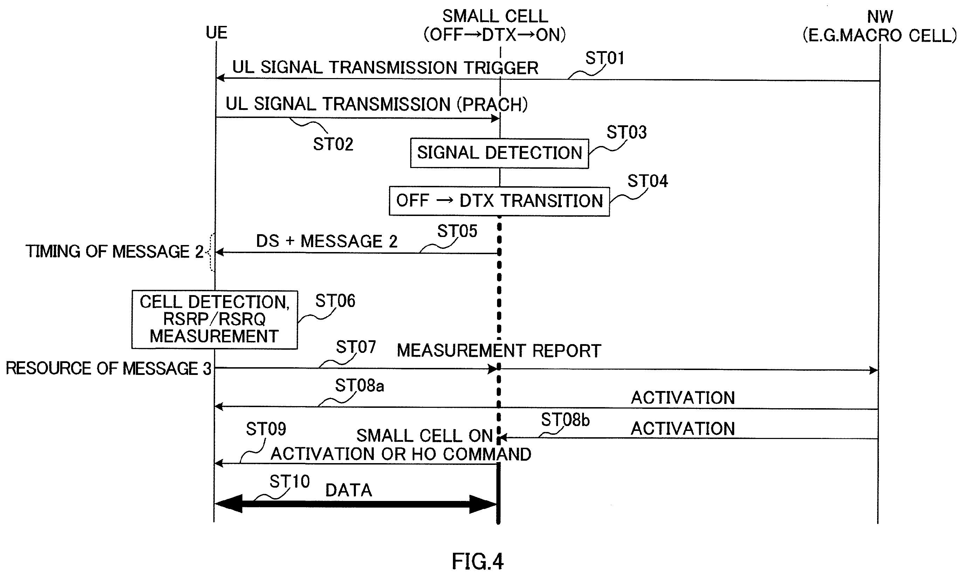

FIG. 4 shows an example of the method of controlling small base stations (small cells) on/off (especially when making small base stations in the off state transition to the on state). Note that, although a case will be shown in the following description where the PRACH signal is used as the UL signal to transmit from the user terminals, the present embodiment is by no means limited to this.

First, a macro base station (macro cell) that is connected with a user terminal commands the user terminal to transmit a UL signal (here, the PRACH signal) (ST01). The user terminal, receiving the transmission command (UL signal transmission trigger) from the macro base station, transmits a UL signal (ST02). Then, a small base station in the off state listens to and detects the UL signal transmitted from the user terminal (ST03).

In ST01, the macro base station can command the user terminal to transmit a UL signal (for example, the PRACH signal), by using a downlink control signal (PDCCH signal) and so on (dedicated preamble). When the macro base station and the small base station use different frequencies (carriers), it is possible to allow the macro base station to use cross carrier scheduling so that the UL signal is transmitted in the frequency used in the small base station. Alternatively, it is also possible to adopt a structure in which the macro base station makes the user terminal transmit the UL signal in the frequency used in the small cell, by using a MAC signal.

Here, "cross carrier scheduling" refers to the method of multiplexing and transmitting, for example, downlink control information (DCI #2) for the downlink shared channel (PDSCH) that is sent in a secondary cell (S-Cell) over the downlink control channel (PDCCH) of another component carrier (primary cell (P-Cell)), when carrier aggregation (CA) is employed.

In ST02, the UL signal transmitted from the user terminal functions as a signal to control the small base station in the off state to transition to DTX. Consequently, when the existing PRACH signal is used as the UL signal to be transmitted from the user terminal, the UL signal assumes a different function from the original function of the PRACH signal (existing random access procedures).

So, with the present embodiment, when the PRACH signal is used to control the small cell on/off in ST02, the macro base station, having commanded the user terminal to transmit the PRACH signal, does not apply the random access procedures on an as-is basis, after the trigger. That is, the macro base station executes control so that, by using the PRACH signal transmitted from the user terminal, operation procedures that are suitable for small cell on/off control are carried out.

Usually, in the existing random access procedures, if a user terminal that has transmitted the PRACH receives no response signal to the PRACH (random access response) from base stations, the user terminal increases the transmission power and transmits the PRACH signal a plurality of times. Consequently, applying the existing PRACH signal to small cell on/off control on an as-is basis will result in unnecessary random access procedures.

So, with the present embodiment, the macro base station and the user terminal, upon receiving the PRACH signal for use in small cell on/off control, carry out procedures apart from the existing the random access procedures (RACH procedures). By this means, it is possible to avoid producing unnecessary random access procedures. Note that, in order to identify between the functions of the PRACH signal, it is possible to report information about the type of the PRACH signal (information to identify between the use in the original function and the use in a new function) from the macro base station to the user terminal by using a downlink control signal and/or higher layer signaling (for example, RRC signaling) and so on. For example, a structure may be adopted which posts a flag to the user terminal in advance by using RRC signaling, so that the user terminal, upon receiving a PRACH transmission command using the PDCCH signal, recognizes the PRACH type in an implicit manner.

Note that the present embodiment is by no means limited to the case where the PRACH transmission command to the user terminal is sent by using the PDCCH signal (dedicated preamble). For example, it is equally possible to employ a structure to transmit the PRACH from the user terminal on a random basis (random preamble).

Also, the macro base station may command the user terminal to transmit a signal other than the PRACH signal as the UL signal. For example, a signal that can be more easily detected than the PRACH signal and a signal that has more preamble patterns than the PRACH signal can be used. For example, a synchronization signal (SS), an uplink control channel signal (PUCCH signal) and so on may be used. The PUCCH signal is synchronous with the macro base station, so that, by employing the PUCCH signal as the UL signal, it is possible to establish synchronization with the macro base station.

Also, it is equally possible to employ a structure in which the small base station in the off state receives signals from the macro base station and maintain synchronization with the macro base station. By allowing the small base station to synchronize with the macro base station, it is possible to have a rough idea of the timing to receive the UL signal (for example, the PRACH signal) transmitted from the user terminal.

Also, the network (for example, the macro base station) may report information about the UL signals (the PRACH signal, the PUSCH signal, etc.) that are transmitted from the user terminal, to the small base station. For example, when the PRACH signal is used as an UL signal, the configuration of this PRACH signal (PRACH resource config) may be reported to the small base station.

By this means, the small base station can detect the UL signals with high accuracy, and in an efficient manner, so that it becomes possible to carry out off/DTX control in an efficient manner. For example, by allowing the small base station to learn information about the timing when the UL signals transmitted from the user terminal will be received, the small base station has to receive the UL signals only at this timing of reception, so that it is possible to reduce the power consumption.

Following this, the small base station having detected the UL signal transmitted from the user terminal (for example, the PRACH signal) transitions from the off state to the discontinuous transmission state (DTX mode) (ST04). For example, the small base station in the off state detects the UL signal and acquires the timing and the preamble number of the UL signal (or the UL signal's identifier such as the sequence pattern and so on). Then, if the detection signal of the UL signal is identified in the small base station, the small base station transitions from the off state to the DTX state.

Note that the small base station may determine whether or not to transition from the off state to DTX state based on the number of UL signals (PRACH signals) detected. For example, if the number of UL signals that are detected is equal to or lower than a predetermined value and/or if the received intensity of the detected UL signals is equal to lower than a predetermined value, the small base station may stay in the off state without transitioning to the DTX state. By this means, when the traffic around the small base station is not heavy, it is possible to avoid transitioning to the DTX state.

Also, based on the timing the UL signal (for example, the PRACH signal) detected in ST03 arrived (the timing of reception), the small base station may adjust the timing to receive the UL signals that are transmitted later from the user terminal. By this means, the user terminal can carry out the connection procedures with the small base station while maintaining the UL transmission timing for the macro base station.

Following this, the small base station having transitioned to the DTX state transmits a detection/measurement signal (discovery signal (hereinafter "DS") and a message 2 (the RACH response) (ST05). The discovery signal is a signal which the user terminal uses to detect the small base station and measure the receiving conditions, and is transmitted from the small base station in a long cycle. The message 2 is a signal that is transmitted as a RACH response of in existing systems, and includes, for example, a detection preamble index, a UE identifier (temporary C-RNTI), transmission timing information (TA command), an uplink grant (UL scheduling grant) and so on.

The discovery signal (DS) may re-use the signal structure of any of the existing synchronization signal (SS), the cell-specific reference signal (CRS), the channel quality measurement signal (CSI-RS), and the position detection reference signal (PRS), or it is equally possible to apply a new reference signal.

With the present embodiment, the timing to transmit the DS can be configured in the timing window of the message 2 (RACH response). That is, assuming that the UL signal that is transmitted from the user terminal is the existing RACH preamble (PRACH signal), the small base station transmits the DS in a period that is provided as the timing to transmit the RACH response (message 2).

The message 2 is transmitted in response to the PRACH signal transmitted from the user terminal within a predetermined period, so that, by transmitting the DS in the timing window of the message 2, the user terminal can have a rough idea of the timing to receive the DS.

Also, the small base station may transmit the message 2, by using the PDSCH, after the DS has been transmitted (for example, in the subframe that comes N subframes after the DS transmission subframe). In this way, by transmitting the DS before the message 2, the user terminal can receive the message 2 after detecting the timing of the DL from the small base station and detecting the cell ID from the message 2. By this means, the user terminal can receive the message 2 adequately.

The user terminal having transmitted the UL signal (for example, the PRACH signal) in ST02 detects/measures the DS in the timing window of the message 2, and also receives the message 2 (ST06). For example, the user terminal detects the small cell based on the DS transmitted from the small base station in the DTX state, and measures the receiving conditions (RSRP, RSRQ, etc.) using the DS.

The user terminal may be structured so that, when failing to receive one or both of the DS and the message 2 within the timing window of the message 2, the user terminal does not carry out power ramping (retransmission with increased transmission power), which is carried out in normal random access procedures. By this means, if there is no small cell near the user terminal, it is possible to avoid making unnecessary UL signal retransmissions. As a result of this, it is possible to reduce the battery consumption in the user terminal.

In this way, according to the present embodiment, the user terminal having transmitted the PRACH signal for use in small cell on/off control carries out procedures apart from the existing the random access procedures, so that it is possible to avoid producing unnecessary random access procedures. Note that, in order to allow the user terminal to identify between the functions of the PRACH signal, as mentioned earlier, it is possible to report information about the type of the PRACH signal (information to identify between the use in the original function and the use in a new function) from the macro base station to the user terminal.

Also, the small base station can transmit system information of the small cell to the user terminal at the same time with the message 2. Alternatively, the small base station may be structured to report the small cell's system information from the connecting cell (for example, the macro base station) to the user terminal.

Following this, the user terminal having received the DS and the message 2 feeds back the measurement results, in the form of a measurement report (MR), by using the PUSCH (ST07).

For example, the user terminal feeds back the measurement report to the small base station by using the UL resource that is specified by the message 2 (for example, the resource for a message 3). Alternatively, the user terminal may also feed back the measurement report to the connecting cell (macro base station), without using the UL resource that is specified by the message 2.

When the small base station receives the measurement report from the user terminal, the MR is reported to the NW (for example, the macro base station), and the macro base station decides to make the small base station on/off. For example, based on the MR, the macro base station reports an SCell activation and makes the small base station on as an SCell (when CA is applied), or decides whether or not a handover (HO) of the user terminal is possible.

If no MR is included in the UL resource specified by the message 2, the small base station may stay in the DTX state and retransmits the DS and the message 2, or may transition to the off state again after a predetermined period passes. Furthermore, when the NW (for example, the macro base station) decides that the small base station needs not to transition to the on state based on the MR transmitted from the user terminal, it is possible to make the small base station transition from the DTX state to the off state.

When the NW (for example, the macro base station) determines to apply an SCell activation or HO to the user terminal, the macro base station sends a report to that effect to the user terminal and the small base station in the DTX state (ST08a and ST08b). As a result of this, the small base station transitions from the DTX state to the on state, and the user terminal is commanded to employ CA or make a handover (ST09).

The user terminal has finished acquiring the DL timing of the small base station from the DS and furthermore finished the connection procedures in ST06, and therefore can soon start communicating (transmitting/receiving data) with the small base station that has entered the on state (ST10).

In this way, the small base station transitions from the off state to the DTX state based on a UL signal transmitted from user terminal, and the transition from the DTX state to the on state is controlled based on the MR from the user terminal for the DS that is transmitted from the small base station during the DTX state. At this time, in the DTX state, the transmission of the detection/measurement signal from the small base station, the transmission of the MR from the user terminal and the connection procedures (random access procedures) may be combined and carried out. By this means, it is possible to reduce interference, save energy, and, furthermore, reduce the delay in data transmission between the user terminal and the small base station.

### (Structure of Radio Communication System)

Now, the structure of the radio communication system according to the present embodiment will be described below.

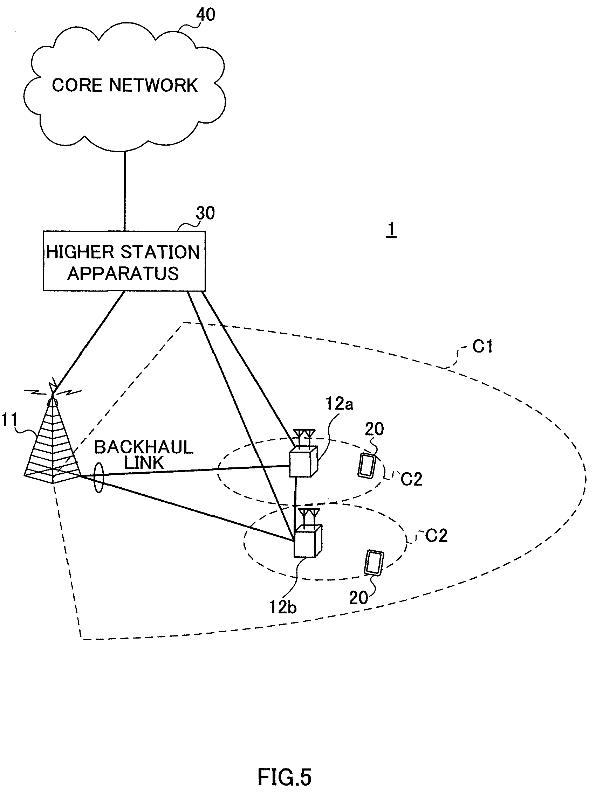

FIG. 5 is a schematic structure diagram of a radio communication system according to the present embodiment. As shown in FIG. 5, the radio communication system 1 includes a macro base station 11, which forms a macro cell C1, and small base stations 12a and 12b, which are placed within the macro cell C1 and which form small cells C2 that are narrower than the macro cell C1. The user terminals 20 are configured to be capable of carrying out radio communication with at least one of the macro base station 11 and the small base stations 12a and 12b (hereinafter collectively referred to as "small base stations 12"). Note that the number of the macro base station 11 and the small base stations 12 is by no means limited to the number illustrated in FIG. 5.

In the macro cell C1 and the small cells C2, the same frequency band may be used, or different frequency bands may be used. Also, the macro base station 11 and each small base station 12 are connected with each other via an inter-base station interface (for example, optical fiber, X2 interface, etc.). The macro base station 11 and the small base stations 12 are each connected with a higher station apparatus 30, and are connected with a core network 40 via the higher station apparatus 30. Note that the higher station apparatus 30 may be, for example, an access gateway apparatus, a radio network controller (RNC), a mobility management entity (MME) and so on, but is by no means limited to these.

Note that the macro base station 11 is a radio base station having a relatively wide coverage, and may be referred to as an "eNodeB (eNB)," a "radio base station," a "transmission point" and so on. The small base stations 12 are radio base stations having local coverages, and may be referred to as "RRHs (Remote Radio Heads)," "pico base stations," "femto base stations," "HeNBs (Home eNodeBs)," "transmission points," "eNodeBs (eNBs)," and so on. The user terminals 20 are terminals to support various communication schemes such as LTE, LTE-A and so on, and may include both mobile communication terminals and stationary communication terminals.

Also, in the radio communication system 1, as radio access schemes, OFDMA (Orthogonal Frequency Division Multiple Access) is applied to the downlink, and SC-FDMA (Single-Carrier Frequency Division Multiple Access) is applied to the uplink.

In the radio communication system 1, a downlink shared channel (PDSCH: Physical Downlink Shared Channel), which is used by each user terminal 20 on a shared basis, downlink control channels (PDCCH: Physical Downlink Control Channel, EPDCCH: Enhanced Physical Downlink Control Channel), a PCFICH, a PHICH, a broadcast channel (PBCH) and so on are used as downlink communication channels. User data and higher layer control information are transmitted by the PDSCH. Downlink control information (DCI) is transmitted by the PDCCH and the EPDCCH.

Also, in the radio communication system 1, an uplink shared channel (PUSCH: Physical Uplink Shared Channel), which is used by each user terminal 20 on a shared basis, an uplink control channel (PUCCH: Physical Uplink Control Channel) and so on are used as uplink communication channels. User data and higher layer control information are transmitted by the PUSCH. Also, downlink radio quality information (CQI: Channel Quality Indicator), delivery acknowledgment information (ACK/NACK) and so on are transmitted by the PUCCH.

Hereinafter, the macro base station 11 and the small base stations 12 will be collectively referred to as "radio base station 10," unless specified otherwise.

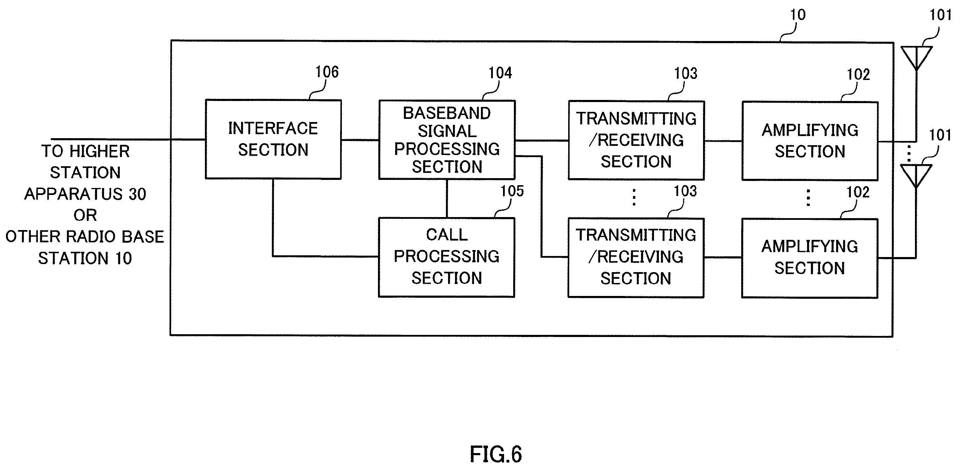

FIG. 6 is a diagram to show an overall structure of a radio base station 10 according to the present embodiment. The radio base station 10 has a plurality of transmitting/receiving antennas 101 for MIMO transmission, amplifying sections 102, transmitting/receiving sections 103, a baseband signal processing section 104, a call processing section 105 and an interface section 106.

User data to be transmitted from the radio base station 10 to a user terminal 20 through the downlink is input from the higher station apparatus 30, into the baseband signal processing section 104, via the interface section 106.

In the baseband signal processing section 104, a PDCP layer process, division and coupling of user data, RLC (Radio Link Control) layer transmission processes such as an RLC retransmission control transmission process, MAC (Medium Access Control) retransmission control, including, for example, an HARQ transmission process, scheduling, transport format selection, channel coding, an inverse fast Fourier transform (IFFT) process and a pre-coding process are performed, and the result is transferred to each transmitting/receiving section 103. Furthermore, downlink control signals are also subjected to transmission processes such as channel coding and an inverse fast Fourier transform, and are transferred to each transmitting/receiving section 103.

Each transmitting/receiving section 103 converts the downlink signals, which are pre-coded and output from the baseband signal processing section 104 on a per antenna basis, into a radio frequency band. The amplifying sections 102 amplify the radio frequency signals having been subjected to frequency conversion, and transmit the results through the transmitting/receiving antennas 101.

On the other hand, as for uplink signals, radio frequency signals that are received in the transmitting/receiving antennas 101 are each amplified in the amplifying sections 102, converted into baseband signals through frequency conversion in each transmitting/receiving section 103, and input in the baseband signal processing section 104.

In the baseband signal processing section 104, the user data that is included in the input uplink signals is subjected to an FFT process, an IDFT process, error correction decoding, a MAC retransmission control receiving process and RLC layer and PDCP layer receiving processes, and the result is transferred to the higher station apparatus 30 via the interface section 106. The call processing section 105 performs call processing such as setting up and releasing communication channels, manages the state of the radio base station 10 and manages the radio resources.

The interface section 106 transmits and receives signals to and from neighboring radio base stations (backhaul signaling) via an inter-base station interface (for example, optical fiber, X2 interface, etc.). For example, data is transmitted and received between the macro base station 11 and the small base stations 12 via the interface section 106. Alternatively, the interface section 106 transmits and receives signals to and from the higher station apparatus 30 via a predetermined interface.

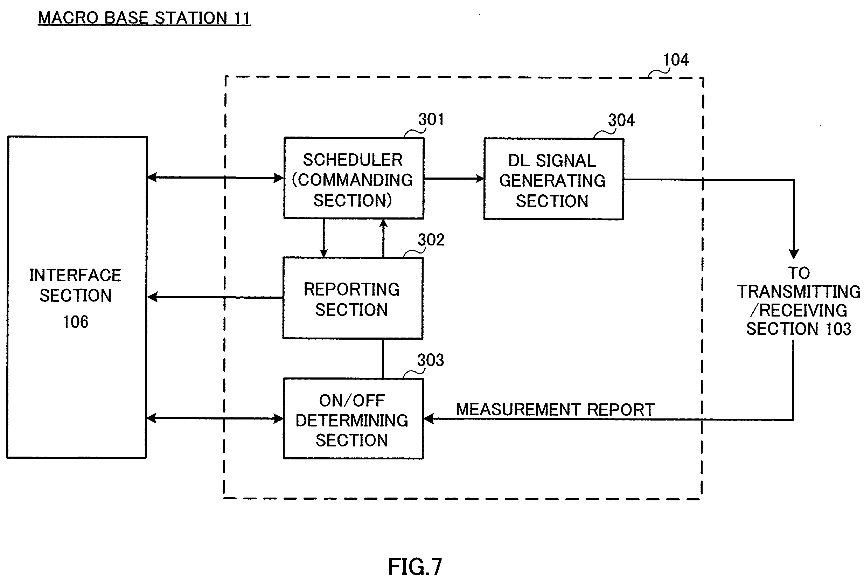

FIG. 7 is a diagram to show a functional structure of the macro base station 11 according to the present embodiment. Note that the following functional structure is formed with the baseband signal processing section 104 provided in the macro base station 11 and so on.

As shown in FIG. 7, the macro base station 11 has a scheduler 301, a reporting section 302, an on/off determining section 30, a DL signal generating section 304 and so on.

The scheduler 301 (commanding section) allocates the radio resources for the DL signals to transmit to the user terminal 20 and the radio resources for the UL signals to be transmitted from the user terminal 20 (scheduling). For example, the scheduler 301 (commanding section) commands the DL signal generating section 304 to generate a DL signal for commanding the user terminal 20 to transmit UL signals (for example, the PRACH signal).

Also, the scheduler 301 controls the reporting of information related to the type of UL signals (for example, the PRACH signal) (whether or not the random access procedures are applicable) to the user terminal. In this case, the scheduler 304 commands the DL signal generating section 305 to include the information related to the type of the PRACH signal in a downlink control signal.

The reporting section 302 reports information about the UL signals (for example, the PRACH signal) transmitted from the user terminal, to the small base station 12, via the interface section 106. For example, the reporting section 302 reports information about the PRACH signal transmitted from the user terminal (PRACH resource config), to the small base station 12 in the off state. In this way, by reporting information about the PRACH signal from the reporting section 302 to the small base station, the small base station can adequately receive the UL signal. Note that the present embodiment can adopt a structure in which the reporting section 302 is omitted.

The on/off determining section 303 determines making the small base station on/off (or DTX) based on the MR (receiving conditions and so on) from the user terminal, for the DS that is transmitted from the small base station. For example, the on/off determining section 303 determines making the small base station in the DTX state on/off based on the MR transmitted from the user terminal (receiving conditions of the DS).

When the MR transmitted from the user terminal is good and the on/off determining section 303 decides that the small base station had better to transition to the on state anew, a report to that effect (application of an SCell activation or HO) is reported to the user terminal and the small base station. On the other hand, when the MR that is transmitted from the user terminal is poor and the on/off determining section 303 decides that the small cell is not in adequate condition for use, the on/off determining section 303 places the small base station in the discontinuous transmission (DTX) state back in the off state.

The DL signal generating section 304 generates DL signals based on commands from the scheduler 301. For example, the DL signal generating section 304 generates control signals, data signals, reference signals and so on. The signals generated in the DL signal generating section 304 are transmitted to the user terminal 20 via the transmitting/receiving sections 103.

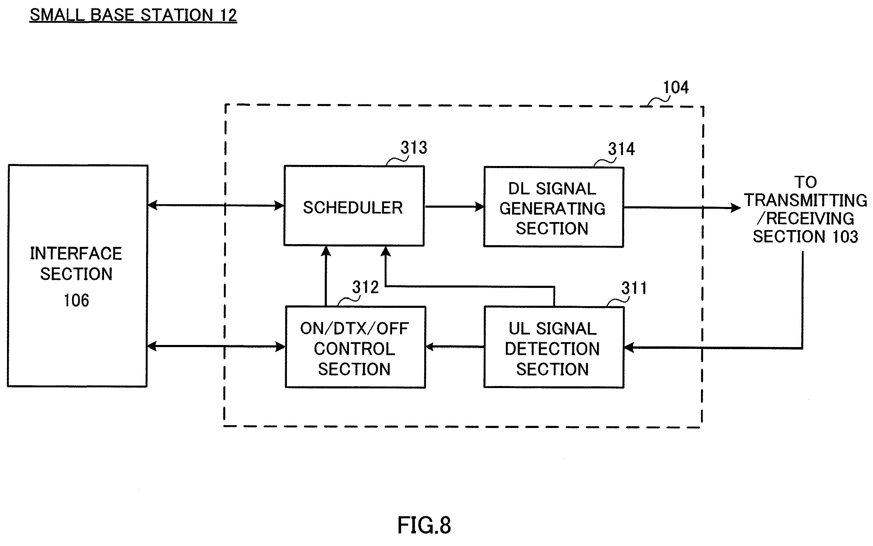

FIG. 8 is a diagram to show a functional structure of the small base station 12 according to the present embodiment. Note that the following functional structure is comprised of the baseband signal processing section 104 provided in the small base station 12 and so on.

As shown in FIG. 8, the small base station 12 has a UL signal detection section 311, an on/DTX/off control section 312, a scheduler 313, a DL signal generating section 314 and so on.

The UL signal detection section 311 listens to and detects the UL signals transmitted from the user terminal (for example, the PRACH signal). Note that the UL signal detection section 311 can acquire information about the UL signals transmitted from the user terminal from the macro base station 11 in advance (for example, information about the PRACH signal), and, furthermore, detect the UL signals based on this UL signal-related information.

The on/DTX/off control section 312 controls the state of the small base station 12 based on the detection results in the UL signal detection section 311. For example, if the small base station 12 is in the off state and a predetermined UL signal (for example, the PRACH signal) is received from the user terminal, the on/DTX/off control section 312 makes the small base station 12 transition from the off state to the DTX state. At this time, the on/DTX/off control section 312 may determine whether or not to allow transition from the off state to the DTX state based on the number of UL signals (PRACH signals) that are detected.

The scheduler 313 allocates the radio resources for the DL signals to transmit to the user terminal 20 (scheduling). For example, when the small base station 12 transitions from the off state to the DTX state based on a UL signal (the PRACH signal) from the user terminal, the scheduler 313 controls the transmission of the detection/measurement signal (DS) and the message 2 (RACH response). At this time, the scheduler 313 may execute control so that the DS is transmitted within the timing window of the message 2 (RACH response). Also, the scheduler 313 may execute control so that, after the DS is transmitted, the message 2 is transmitted by using the PDSCH (for example, in the subframe that comes N subframes after the DS transmission subframe).

The DL signal generating section 314 generates DL signals based on commands from the scheduler 313. For example, the DL signal generating section 314 generates control signals, data signals, reference signals and so on. Also, the DL signal generating section 314 generates the signals to allow the user terminal 20 to detect the small base station, the signals to be included in the message 2 and so on. The signals generated in the DL signal generating section 314 are transmitted to the user terminal 20 via the transmitting/receiving sections 103.

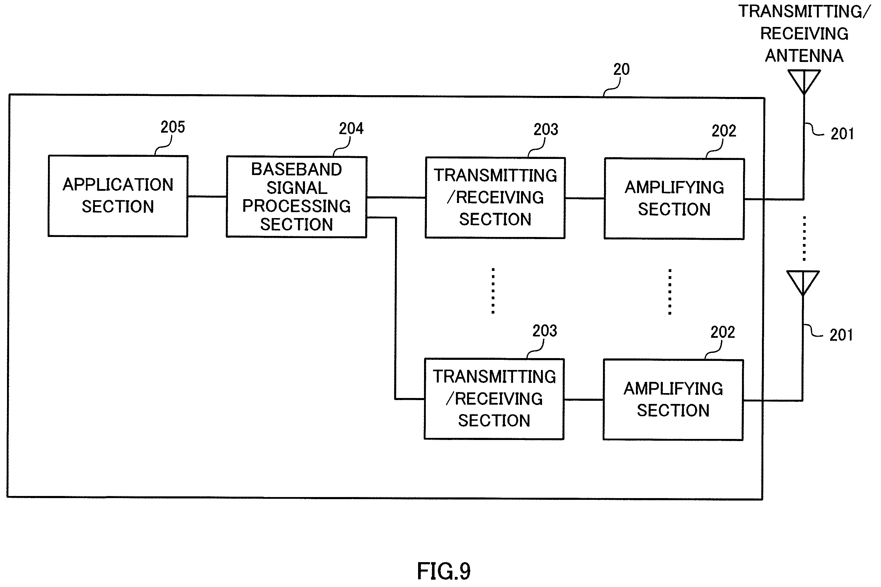

FIG. 9 is a diagram to show an overall structure of a user terminal 20 according to the present embodiment. The user terminal 20 has a plurality of transmitting/receiving antennas 201 for MIMO transmission, amplifying sections 202, transmitting/receiving sections (receiving sections) 203, a baseband signal processing section 204 and an application section 205.

As for downlink data, radio frequency signals that are received in a plurality of transmitting/receiving antennas 201 are each amplified in the amplifying sections 202, and subjected to frequency conversion and converted into the baseband signal in the transmitting/receiving sections 203. This baseband signal is subjected to an FFT process, error correction decoding, a retransmission control receiving process and so on, in the baseband signal processing section 204. In this downlink data, downlink user data is transferred to the application section 205. The application section 205 performs processes related to higher layers above the physical layer and the MAC layer, and so on. Furthermore, in the downlink data, broadcast information is also transferred to the application section 205.

Meanwhile, uplink user data is input from the application section 205 into the baseband signal processing section 204. The baseband signal processing section 204 performs a retransmission control (H-ARQ (Hybrid ARQ)) transmission process, channel coding, pre-coding, a DFT process, an IFFT process and so on, and transfers the result to each transmitting/receiving section 203. The baseband signal that is output from the baseband signal processing section 204 is converted into a radio frequency band in the transmitting/receiving sections 203. After that, the amplifying sections 202 amplify the radio frequency signals having been subjected to frequency conversion, and transmit the results from the transmitting/receiving antennas 201.

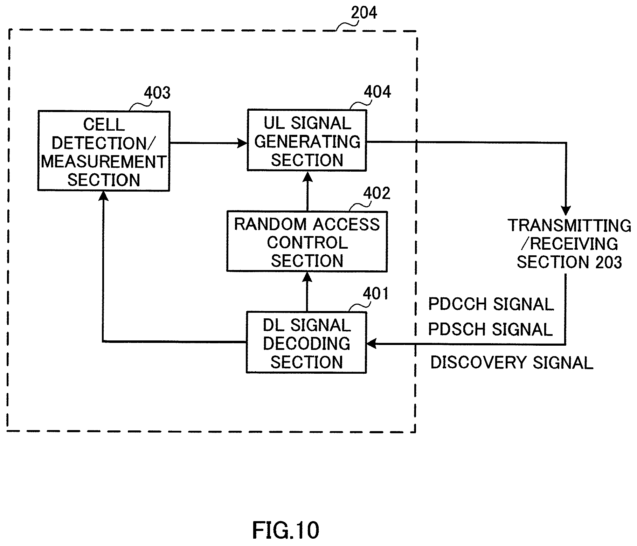

FIG. 10 is a principle functional structure diagram of the baseband signal processing section 204 provided in the user terminal 20. As shown in FIG. 10, the baseband signal processing section 204 provided in the user terminal 20 at least has a DL signal decoding section 401 (acquisition section), a random access control section 402, a cell detection/measurement section 403 and a UL signal generating section 404.

The DL signal decoding section 401 (acquisition section) decodes the DL signals transmitted from the macro base station 11 and the small base station 12. For example, the downlink control information (PDCCH signal) transmitted from the macro base station 11 and the small base station 12 and the detection/measurement signal (DS) transmitted from the small base station 12 are acquired. The DL signals acquired in the DL signal decoding section 401 are output to the random access control section 402 and the cell detection/measurement section 403.

When a DL signal (for example, the PDCCH signal) includes information related to a UL signal (for example, the PRACH signal) transmission trigger command, the DL signal decoding section 401 outputs this information to the random access control section 402. Furthermore, when a DL signal (for example, the PDCCH signal) includes information about the type of the PRACH signal (as to whether or not the random access procedures are applicable), the DL signal decoding section 401 outputs this information to the random access control section 402.

The random access control section 402 controls the random access procedures. For example, the random access control section 402 controls the PRACH signal based on a predetermined downlink control signal (PRACH signal trigger) transmitted from the macro base station. Also, based on the information about the type of the PRACH signal transmitted from the macro base station 11 (whether or not the random access procedures are applicable), the random access control section 402 can carry out procedures apart from the existing random access procedures (RACH procedures). For example, when the random access control section 402 fails to receive one or both of the DS and the message 2 in the timing window of the message 2, power ramping (retransmission with increase transmission power), which is carried out in normal random access procedures, is not carried out.

When the PRACH signal is used as a trigger for small cell on/off control, the random access control section 402 carries out operations suitable for small cell on/off control, instead of applying the existing the random access procedures on an as-is basis. In this case, regardless of whether or not there is a response to the PRACH signal transmitted from the user terminal 20, it is possible to stop the operation of increasing the transmission power and retransmitting the PRACH signal.

The cell detection/measurement section 403 detects the DL signal (discovery signal) transmitted from the small base station having detected the PRACH signal. Upon detecting the DS, the cell detection/measurement section 403 measures the receiving conditions (RSRP, RSRQ etc.) of the DS. Also, when the UL signal (PRACH signal) has been transmitted based on a command from the macro base station 11, the cell detection/measurement section 403 can detect/measure the DS within the timing window of the message 2. The measurement results are fed back to the macro base station and the small base station in the form of a measurement report.

The UL signal generating section 404 generates UL signals (PRACH signal, measurement report, etc.) based on commands from the random access control section 402 and the cell detection/measurement section 403. Also, the UL signal generating section 404 generates uplink control signals such as delivery acknowledgement signals and so on, and uplink data signals.

Now, although the present invention has been described in detail with reference to the above embodiment, it should be obvious to a person skilled in the art that the present invention is by no means limited to the embodiment described herein. The present invention can be implemented with various corrections and in various modifications, without departing from the spirit and scope of the present invention defined by the recitations of the claims. Consequently, the description herein is provided only for the purpose of explaining examples, and should by no means be construed to limit the present invention in any way. Furthermore, the examples described herein may be combined and implemented as appropriate.

The disclosure of Japanese Patent Application No. 2013-199192, filed on September 26, 2013, including the specification, drawings and abstract, is incorporated herein by reference in its entirety.

## Claims

1. A base station that forms a small cell that is arranged to overlap a macro cell and applies an on state, a DTX state and an off state in a switching manner, the base station comprising:
a detection section that detects a UL signal transmitted from a user terminal;
a control section that controls transition from the off state to the DTX state based on the detection of the UL signal; and
a transmission section that transmits a detection/measurement signal in the DTX state,
wherein the control section controls transition from the DTX state to the on state based on information that is reported depending on a result of a measurement report from the user terminal having received the detection/measurement signal.

2. The base station according to claim 1, wherein the detection section acquires information about the UL signal transmitted from the user terminal, from a macro base station that forms the macro cell.

3. The base station according to claim 1 or claim 2, wherein the UL signal transmitted from the user terminal is a PRACH signal, a PUCCH signal or a synchronization signal that is triggered from the macro base station forming the macro cell.

4. The base station according to claim 1, wherein, if the UL signal that is transmitted from the user terminal is an existing RACH preamble, the transmission section
transmits the detection/measurement signal in a period that is provided as a timing to transmit a RACH response.

5. The base station according to claim 4, wherein the transmission section transmits the RACH response after transmitting the detection/measurement signal.

6. The base station according to claim 1, wherein the control section determines transitioning to the DTX state when the number of UL signals detected is equal to or greater than predetermined value.

7. A user terminal that can communicate with a macro base station forming a macro cell and a small base station forming a small cell that is arranged within the macro cell, the user terminal comprising:
a transmission section that transmit a UL signal;
a control section that controls random access procedures; and
a receiving section that receives a detection/measurement signal and a message 2 transmitted from the small base station having transitioned to a DTX state based on the UL signal, wherein the receiving section receives the detection/measurement signal and the message 2 in a predetermined period after the transmission of the UL signal.

8. The user terminal according to claim 7, wherein, when the detection measurement signal and/or the message 2 is not received in the predetermined period after the transmission of the UL signal, the control section stops existing random access procedures.

9. The user terminal according to claim 7, wherein the transmitting/receiving section transmits a measurement result of the detection/measurement signal to the small base station in the form of a measurement report via a radio resource that is reported in the message 2.

10. A radio communication control method for controlling a small base station forming a small cell that is arranged to overlap a macro cell, by switching among an on state, a DTX state and an off state, the radio communication control method comprising, in the small base station, the steps of:
detecting a UL signal transmitted from a user terminal;
controlling transition from the off state to the DTX state based on the detection of the UL signal;
transmitting a detection/measurement signal in the DTX state; and
controlling transition from the DTX state to the on state based on information that is reported depending on a result of a measurement report from the user terminal having received the detection/measurement signal.
